# EUROPÄISCHE PATENTSCHRIFT

(11) **EP 0 668 838 B1**
(45) Veröffentlichungstag und Bekanntmachung des Hinweises auf die Patenterteilung: **04.12.1996**
(21) Anmeldenummer: 93917587.3
(22) Anmeldetag: 14.07.1993
(51) Int. Cl.: B65G 17/12, B65G 17/36

(54) **TASCHENFÖRDERER**
CANVAS SLING CONVEYOR
TRANSPORTEUR A POCHES

(30) Priorität: 17.07.1992 DE 4223634
(43) Veröffentlichungstag der Anmeldung: 30.08.1995
(60) Teilanmeldung: 95119847.2
(73) Patentinhaber: Svedala Industri (Deutschland) GmbH, 22047 Hamburg (DE)
(72) Erfinder: Nolte, Günther, D-47447 Moers (DE)
(74) Vertreter: Rupprecht, Kay, Dipl.-Ing.
(86) Internationale Anmeldenummer: EP9301848
(87) Internationale Veröffentlichungsnummer: WO9402391

(56) Entgegenhaltungen:
- DE-C- 94 681
- FR-A- 2 338 873
- FR-A- 2 399 961

## Beschreibung

Die Erfindung betrifft einen Taschenförderer, mit einem endlosen Zugorgan, das über Antriebs-, Umlenk- und Ablenktrommeln geführt ist und das wenigstens zwei beabstandete Trägergurte aufweist, zwischen denen eine Vielzahl zueinander beabstandeter Quertraversen angeordnet sind, und mit Taschen, die jeweils eine aus Gummi oder gummiartigem Material hergestellte Bodenwand aufweisen, die zwischen benachbarten Quertraversen verläuft.

Ein derartiger Taschenförderer geht aus der DE 38 37 115 A1, der DE-PS 966 618 und aus der DE 66 03 142 U hervor. Bei den aus den ersten beiden Druckschriften bekannten Taschenförderern, sogenannten Innenförderern, erfolgt die Zu- und Abfuhr des Schüttgutes an der Innenseite des umlaufenden Zugorgans. Dieses weist voneinander beabstandete endlose Trägergurte auf, an denen mittels Halterungen Quertraversen befestigt sind. Zwischen den Trägergurten sind nach innen offene Taschen angeordnet, die durch einen endlosen Gurt gebildet werden. Die Ränder der Taschen sind jeweils fest mit einer Seitenwand aus steifem Material verbunden, so daß die Seitenwände als formgebende Stützelemente der Tasche wirken. Bei dem Taschenförderer gemäß der DE 38 37 115 A1 sind benachbarte Quertraversen jeweils an ihren Enden über Laschen miteinander verbunden, so daß die Quertraversen und die Laschen eine gelenkige Laschenkette bilden, die zu den Trägergurten parallel geschaltet ist und mit diesen umläuft. Diese Anordnung der Taschen bezüglich des Zugorgans und das Vorsehen einer zusätzlichen Laschenkette führt zu einem aufwendigen Aufbau des Taschenförderers, was sich in größerer Reparaturanfälligkeit und höheren Herstellungskosten wiederspiegelt. Desweiteren sind Seitenwände aus steifem Material erforderlich, um die Bodenwand der Taschen in geneigter Lage gegenüber dem Zugorgan zu halten. Der Taschenförderer gemäß DE 66 03 142 U weist demgegenüber gar keine Seitenwände auf, sondern lediglich flexible Taschen, die an Quertraversen in Form von Stangen befestigt sind. Die Nachteile dieses bekannten Taschenförderers liegen insbesondere darin, daß er aufgrund seiner einfachen Konstruktion, insbesondere auch wegen der simplen Art der Befestigung der Quertraversen an den Trägergurten für einen Einsatz mit schweren Gütern nicht geeignet ist. Erfahrungen mit Taschenförderern sowie gesteigerte Anforderungen an die störungsfreie Stehzeit eines Taschenförderers haben dazu geführt, neue Wege der Taschen-Konstruktion und der Befestigung der Taschen zu gehen, um einen insgesamt zuverlässigeren Fördergurt für extreme Anwendungsbereiche zur Verfügung zu haben.

Aus der DE 38 35 619 C2 ist ein normaler Fördergurt bekannt, auf dessen Basisgurt eine Vielzahl von Stollenfüßen mit Stollen befestigt sind, die sich quer zur Förderrichtung erstrecken und das Fördergut in Förderrichtung mitnehmen. Zwischen benachbarten Stollen ist jeweils ein Siebtuch aufgehängt, welches sich von der Spitze eines Stollens zu dem Stollenfuß des in Förderrichtung vorangehenden Stollens erstreckt. Zur Befestigung des Siebtuches an dem Stollenfuß ist eine Befestigungsschiene vorgesehen, mit der jedes Siebtuch mittelbar über den Stollenfuß an dem Basisgurt befestigt ist. Während es bei diesem bekannten Fördergurt die Stollen sind, welche das zwischen ihnen verlaufende Siebtuch tragen und an denen es befestigt ist, hängen die Taschen eines Taschenfördergurtes unmittelbar an den Trägergurten, was insbesondere hohe Anforderungen an die Taschen selbst und an die Befestigung der Taschen an den Trägergurten stellt. Mit jener unmittelbaren Befestigung der Taschen an den Trägergurten werden die Taschen auch mehr als die zwischen den Stollen des bekannten Fördergurtes aufgehängten Siebtücher beansprucht, wenn die Trägergurte um die Antriebs-, Umlenk- oder Ablenktrommeln laufen.

Aus der DE-AS 12 63 591 ist ein Becherförderer bekannt, dessen "Befestigungsteil" Bestandteil der Tasche (dort "Becher" genannt) ist, die sich aus einem starren hinteren Teil und aus einem flexiblen vorderen Teil zusammensetzt. Vergleichbar mit der Quertraverse des vorliegenden Taschenförderers ist lediglich eine Querstange, die eine andere Ausbildung als die Quertraverse besitzt.

Aus der DE 18 29 977 U ist ein Taschenförderer bekannt, bei dem der Becherboden aus unflexiblem Material, nämlich aus Stahlblech gebildet ist, und der zum Schwenkzapfen verlaufende ebene Abschnitt ist unter Einschluß eines Winkels mit der Laufebene der Schwenkzapfen aus dem Stahlblech geformt.

Die DE 38 02 078 beschreibt einen Taschenförderer, der ein oberes und ein unteres Kettenrad aufweist, über welche eine endlose Kette läuft. An der Kette sind über Tragrahmen Taschen befestigt. Jede Tasche besteht aus Seitenwänden aus armiertem Gummi und einer die Seitenwände verbindenden Wandung aus quersteifem Tuch. Durch die Verbindung von armierten Seitenwandungen und quersteifem Tuch wird eine relativ formstabile Tasche geschaffen, die bezüglich des Zugorgans geneigt und lückenlos aneinandergereiht sind. In Höhe der Quertraversen des Zugorgans ist der obere und hintere Rand der Bodenwand der einen Tasche umgebogen, so daß er den unteren oder vorderen Rand der benachbarten Tasche übergreift. Hier sind die aneinanderliegenden Ränder der benachbarten Taschen miteinander verklebt oder verschraubt.

Schließlich weist das Zugorgan des aus der DE 1 080 480 bekannten Taschenförderers durch Einlagen versteifte Querstege auf. Die mit Abstand zueinander an dem Zugorgan festgelegten Taschen sind jeweils zwischen zwei benachbarten Querstegen befestigt. Hierzu ist die flexible Bodenwandung der Taschen bis in den Bereich der Querstege verlängert und an diesen festgelegt. Seitlich werden die Taschen durch formsteife Seitenwände begrenzt. Gegenüber dem endlos umlaufenden Zugorgan weisen die Taschen eine Neigung auf, die durch die formsteifen Seitenwände bestimmt wird.

Das der vorliegenden Erfindung zugrunde gelegene Problem bestand darin, einen Taschenförderer der aus der DE 66 03 142 U bekannten Art derart weiterzubilden, daß er eine größere Leistungsfähigkeit besitzt.

Diese Aufgabe wird bei einem Taschenförderer der vorstehend genannten Art dadurch gelöst, daß die Quertraversen zur Befestigung der Bodenwand eine plane Befestigungsfläche aufweisen, die mit der Trägergurtebene einen Winkel einschließt. Die an der Befestigungsfläche befestigte flexible Bodenwand der Tasche erfährt somit in Fortsetzung der Befestigungsfläche eine Ausrichtung, die ein sicheres Abführen des Schüttgutes in das Innere der Tasche garantiert. Wesentlich ist insbesondere, daß die durch die Befestigungsfläche vorgegebene Ausrichtung der Taschen, d.h. die Neigung der Taschen gegen die Trägergurtebene, formgebende oder steife Seitenwände der Taschen entbehrlich macht. Hinzu kommt, daß die Befestigungsfläche als Führungsfläche für das Schüttgut dient. Das Maß der Neigung der Befestigungsfläche zur Zugträgerebene kann abhängig von dem jeweiligen Einzelfall gewählt werden. Der erfindungsgemäße Taschenförderer weist somit einen einfachen Aufbau mit wenigen Bauteilen auf. Da die verwendeten Bauteile zueinander keine Relativbewegungen ausführen und auch keine Gelenke notwendig sind, wird eine hohe Stabilität und ein ruhiger Lauf des Taschenförderers bei niedrigem Verschleiß erzielt.

Vorteilhafte Weiterbildungen der Erfindung sind in den Unteransprüchen angegeben.

Beispielsweise können die Quertraversen eine dreieckförmige Querschnittsform aufweisen, die vorzugsweise die Form eines gleichschenkligen rechtwinkligen Dreiecks besitzt. Durch diese Formgebung werden beidseits geneigte Führungsflächen für das Schüttgut geschaffen, wodurch ein gleichmäßiges und sicheres Einfüllen des Schüttgutes in das Innere der lückenlos aneinander gereihten Taschen erreicht wird. Auch in diesem Fall kann der Neigungswinkel dem jeweiligen Einsatzfall angepaßt werden. Diese Ausgestaltung gewährleistet ferner, daß das Schüttgut nicht auf flächigen Zwischenbereichen zwischen den einzelnen Taschen liegen bleibt. Die dreieckförmigen Quertraversen können - je nach Ausführungsform des Taschenförderers - entweder mit Antriebs- und Umlenktrommeln zusammenwirken, die entsprechend gestaltete Ausnehmungen aufweisen, oder aber vorzugsweise nur mit entsprechend gestalteten Ablenktrommeln, während dann der Antrieb ein reiner Reibantrieb ist. Während im ersteren Fall die Quertraversen auf der Laufseite der Trägergurte angeordnet sind, befinden sie sich bei der bevorzugten zweiten Ausführungsform auf der Tragseite der Trägergurte und sorgen im Zusammenwirken mit den ausgeschnittenen Ablenktrommeln für einen synchronisierten Lauf der beiden separaten Trägergurte.

In weiterer Ausgestaltung können die Quertraversen in ihrer Längsrichtung unterschiedliche Querschnittsformen aufweisen. Während die Querschnittsform zwischen den Trägergurten nach wie vor die eines Dreiecks sein kann, dessen Hypotenuse die Befestigungsfläche zur Befestigung der Bodenwand bildet, ist die Querschnittsform der Quertraversen dort, wo diese an den Trägergurten befestigt werden, derart gewählt, daß eine möglichst große Querschnittsfläche auf den Trägergurten aufliegt. Hinzu kommt bei der Wahl der Querschnittsform der Quertraversen im Bereich der Zugträger, daß jene Abschnitte der Quertraversen in besonderem Maße beansprucht werden, wenn die Trägergurte um eine der Trommeln umlaufen.

Alternativ hierzu oder auch als zusätzliche Ausgestaltung ist in vorteilhafter Weise vorgesehen, daß die Quertraversen an den beiden Enden als Zapfen ausgebildet sind, die drehbar in Lagerblöcken gelagert sind, welche auf den Trägergurten befestigt sind. Da diese Lagerblöcke beim Umlauf der Trägergurte um die Trommeln gestaucht bzw. gedehnt werden, und da diese Verformungen sich nachteilig auf die Verbindung der Lagerblöcke mit den Trägergurten auswirken können, ist vorzugsweise vorgesehen, daß jeder Lagerblock außer einer Bohrung, die einen Zapfen einer Quertraverse aufnimmt, weitere Durchbrüche aufweist, die im Bereich zwischen der Bohrung und der Unterfläche des Lagerblocks angeordnet sind. Diese zusätzlichen Durchbrüche absorbieren in vorteilhafter Weise die Verwindungskräfte, die beim Umlauf um eine Antriebs-, Umlenk- oder Ablenktrommel erzeugt werden. Der damit erzielte Vorteil ist der, daß die beim Umlauf um die Trommeln auf die Unterfläche jedes Lagerblocks wirkenden Kräfte, die einem Ablösen des Lagerblocks von dem Trägergurt Vorschub leisten, wirksam verringert werden.

Vorzugsweise sind die Quertraversen aus Gummi oder gummiartigem Material hergestellt, das mit einer Armierung versehen ist. Hierdurch wird ein besonders ruhiger Lauf des Taschenförderers erreicht. Die Armierung kann als einzelne Stahlseile und/oder als ein im Zentrum angeordnetes Stahlrohr ausgebildet sein. Um ferner ein stabiles Verbundgebilde zu schaffen, dessen Bauteile keine Relativbewegung zueinander ausführen, sind die Quertraversen an ihren Endbereichen in vorteilhafter Weise mit den beabstandeten Trägergurten verklebt, die ebenfalls aus Gummi oder gummiartigem Material bestehen. Selbstverständlich ist es auch denkbar, daß sowohl die Quertraversen als auch die Trägergurte oder eines der Bauteile aus entsprechend geeigneten Kunststoffmaterialien bestehen.

An der Befestigungsfläche der Quertraverse können in weiterer Ausgestaltung Befestigungsmittel für die Tasche vorgesehen sein, die insbesondere als U-förmige Schraubbolzen ausgebildet sind. An diesen sind die Taschen lösbar befestigt. Somit kann gegebenenfalls jede Tasche unabhängig von den anderen Taschen ausgewechselt werden.

Eine weitere Steigerung der Festigkeit der Gesamtanordnung sowie eine gewünschte Ausrichtung der Taschenseitenwände wird dadurch erreicht, daß an der Befestigungsfläche für die Bodenwand Nuten zur Aufnahme der Seitenwände der Taschen ausgebildet sind. Hierbei weisen die Taschen vorzugsweise eine U-förmige Querschnittsform auf, wobei die Bodenwand quersteife Eigenschaften besitzt und die Seitenwände, zwischen denen die Bodenwand angeordnet ist, als formgebende Stützelemente der Taschen wirken. Durch die übereinanderliegende Anordnung und Festlegung der Bodenwände benachbarter Taschen an der Befestigungsfläche wird die Montage vereinfacht.

Je nach Ausführungsform des Taschenförderers besitzen entweder die Antriebs- und die Umlenktrommeln auf ihrem Umfang Ausnehmungen zur Aufnahme der Lagerblöcke bzw. der Enden der Quertraversen, wobei dann sowohl Antriebs- als auch Umlenktrommeln für einen synchronisierten Lauf der Trägergurte sorgen, oder aber nur die Ablenktrommeln weisen auf ihrem Umfang jene Ausnehmungen zur Aufnahme der Lagerblöcke bzw. der Enden der Quertraversen auf und sorgen damit für die nötige Synchronisation.

In der Praxis wird beim Betrieb eines Fördergurtes ein gewisser Schlupf der Trägergurte gegenüber den Antriebs-, den Umlenk- und den Ablenktrommeln nicht zu vermeiden sein. Dieser Schlupf hat zur Folge, daß die Quertraversen oder die Lagerblöcke, in denen die Quertraversen gehalten sind, nicht mehr exakt in die Ausnehmungen der Trommeln passen, sondern mehr und mehr auf ein Trommelsegment auftreffen, das zwischen zwei benachbarten Ausnehmungen angeordnet ist. Um das zu vermeiden ist vorzugsweise vorgesehen, daß die Trommelsegmente radial verstellbar ausgebildet sind. Durch ein radiales Verstellen der Trommelsegmente wird der Umfang der Trommel verändert, wodurch der Eingriff der Quertraversen bzw. der Lagerblöcke in die Ausnehmungen wieder hergestellt, mithin der Schlupf korrigiert werden kann. Damit wird vermieden, daß die Quertraversen bzw. die sie haltenden Lagerblöcke die Antriebskraft von den Antriebstrommeln auf das Zugorgan übertragen, was die Quertraversen und die Lagerblöcke nicht aushalten würden.

Um die Quertraversen für manche Anwendungsfälle auf der Laufseite der Trägergurte anordnen zu können, ohne aber gleichzeitig die bekannten Probleme mit dem Schlupf zwischen den Antriebstrommeln und den Trägergurten zu bekommen, ist vorzugsweise vorgesehen, daß die Quertraversen die Trägergurte quer zur Förderrichtung nur teilweise überdecken, so daß zwischen den Enden der Quertraversen und dem Außenrand der Trägergurte je ein freier Randstreifen gebildet wird. Auf diesen freien Randstreifen können dann die Trommeln ohne Beeinträchtigung durch die Quertraversen abrollen.

Im folgenden werden drei Ausführungsbeispiele der Erfindung anhand einer Zeichnung näher erläutert.

Es zeigen:
- Fig. 1: eine schematische Seitenansicht eines ersten Ausführungsbeispiels eines erfindungsgemäßen Taschenförderers;
- Fig. 2: eine perspektivische Draufsicht auf einen Abschnitt des Taschenförderers in Richtung des Pfeiles II der Fig. 1;
- Fig. 3: eine Draufsicht auf eine am Zugorgan montierte Tasche;
- Fig. 4: einen Schnitt längs der Linie IV - IV der Fig. 3;
- Fig. 5: eine perspektivische Darstellung einer Tasche des Taschenförderers in Einzeldarstellung;
- Fig. 6 und 7: Vertikalschnitte durch verschiedenartig ausgestaltete Quertraversen;
- Fig. 8: eine schematische Seitenansicht einer zweiten Ausführungsform eines erfindungsgemäßen Taschenförderers;
- Fig. 9: einen ausschnittsweisen Schnitt (wie Fig. 4) durch einige Taschen des Taschenförderers gemäß Fig. 8;
- Fig. 10: eine ausschnittsweise Draufsicht auf eine mögliche Querschnittsformgestaltung einer Quertraverse gemäß Fig. 9;
- Fig. 11 und 12: Vertikalschnitte durch verschiedenartig ausgestaltete Lagerblöcke;
- Fig. 13: eine vergrößerte Seitenansicht des Lagerblocks gemäß Fig. 12, in Normalstellung und unter Biege-Beanspruchung;
- Fig. 14: eine schematische Seitenansicht einer einstellbaren Ablenktrommel; und
- Fig. 15: eine Darstellung entsprechend der Fig. 2, jedoch mit seitlich über die Quertraversen überstehenden Trägergurten.

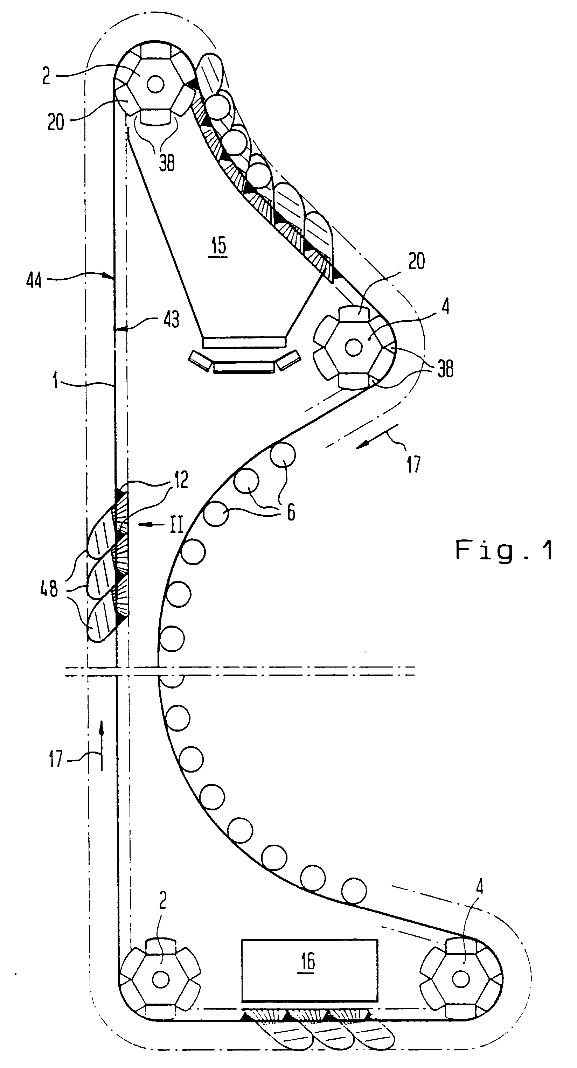

Fig. 1 zeigt eine schematische Seitenansicht eines ersten Ausführungsbeispiels eines erfindungsgemäßen Taschenförderers. Dieser besteht im wesentlichen aus einem endlosen Zugorgan 1, das in Richtung der Pfeile 17 über eine untere und eine obere Antriebstrommel 2, eine untere und obere Umlenktrommel 4 sowie um eine ganze Reihe von Ablenktrommeln 6 geführt ist, und aus einer Vielzahl hintereinander an dem Zugorgan 1 befestigter Taschen 48 zur Aufnahme des Schüttguts an einer Einfüllschurre 16 und zur Abgabe des Schüttguts an einer Ablaufschurre 15. Die Ablenktrommeln 6 haben hierbei die Aufgabe, den Rücklauf des Zugorgans 1 möglichst dicht an den Vorlauf heranzubringen, damit beispielsweise eine gemeinsame Tunnelförderung des Vor- und des Rücklaufs möglich ist, oder auch nur eine Streckenführung des Vor- und des Rücklaufs auf einer verhältnismäßig engen Trasse. Um die gemeinsame Führung des Vor- und des Rücklaufs auf einer engen Trasse über weite Strecken anzudeuten, ist die schematische Seitenansicht unterhalb der drei im Vorlauf befindlichen Taschen 48 unterbrochen dargestellt.

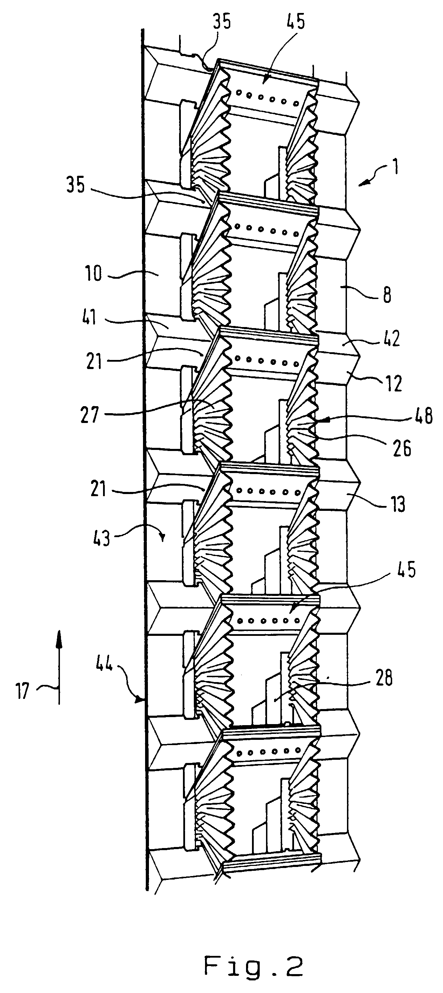

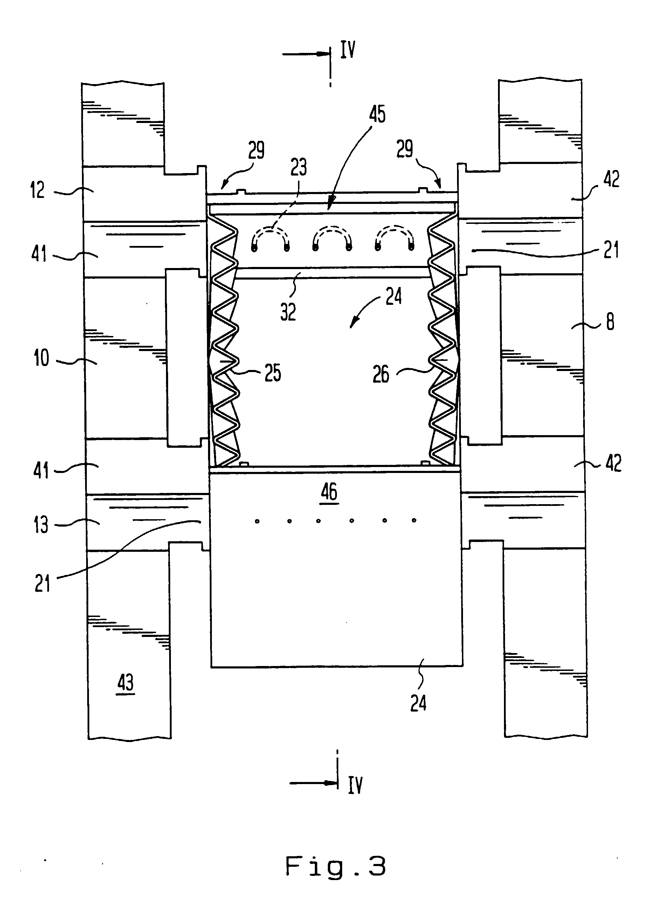

Das Zugorgan 1 besteht aus zwei parallel voneinander beabstandeten Trägergurten 8, 10 (siehe Figuren 2 und 3), zwischen denen in regelmäßigem Abstand zueinander Quertraversen 12 verlaufen, die mit ihren Enden 41, 42 auf den Trägergurten 8, 10 befestigt sind. An den Quertraversen 12 sind wiederum die zwischen den Trägergurten 8, 10 durchhängenden Taschen 48 befestigt. In diesem Ausführungsbeispiel besitzen die Antriebstrommeln 2 und die Umlenktrommeln 4 über den Umfang verteilte Ausnehmungen 38, die zwischen Trommelsegmenten 20 gebildet sind und beim Umlauf des Zugorgans 1 die Enden 41, 42 der Quertraversen 12 aufnehmen. Da sich die Quertraversen 12 in diesem Ausführungsbeispiel auf der Laufseite 43 des Zugorgans 1 bzw. der Trägergurte 8, 10 befinden, und die Ablenktrommeln 6 nur auf der Tragseite 44 des Zugorgans 1 wirken, sind letztere am Umfang glatt ausgebildet, d. h. sie besitzen keine Ausnehmungen. Der Eingriff der Quertraversen 12 in die Ausnehmungen 38 bei den Antriebstrommeln 2 und den Umlenktrommeln 4 dient in erster Linie der Synchronisation des Laufs der beiden voneinander ansonsten unabhängigen Trägergurte 8, 10 und nicht dem Antrieb des Zugorgans 1. Da die im Betrieb auf die Quertraversen 12 wirkenden Scherkräfte beim Umlauf in den Antriebstrommeln 2 durch deren Antriebskraft zu einer Zerstörung bzw. zu einem Abscheren der Quertraversen 12 von den Trägergurten 8, 10 führen würde, soll es weitestgehend vermieden werden, das Zugorgan 1 in Art eines Zahnradantriebs durch die Antriebstrommeln 2 anzutreiben.

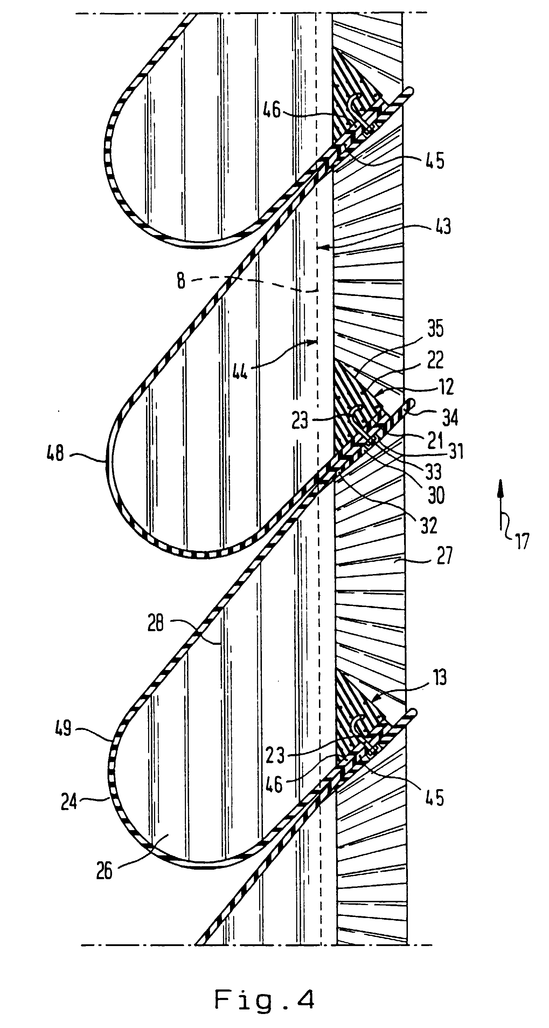

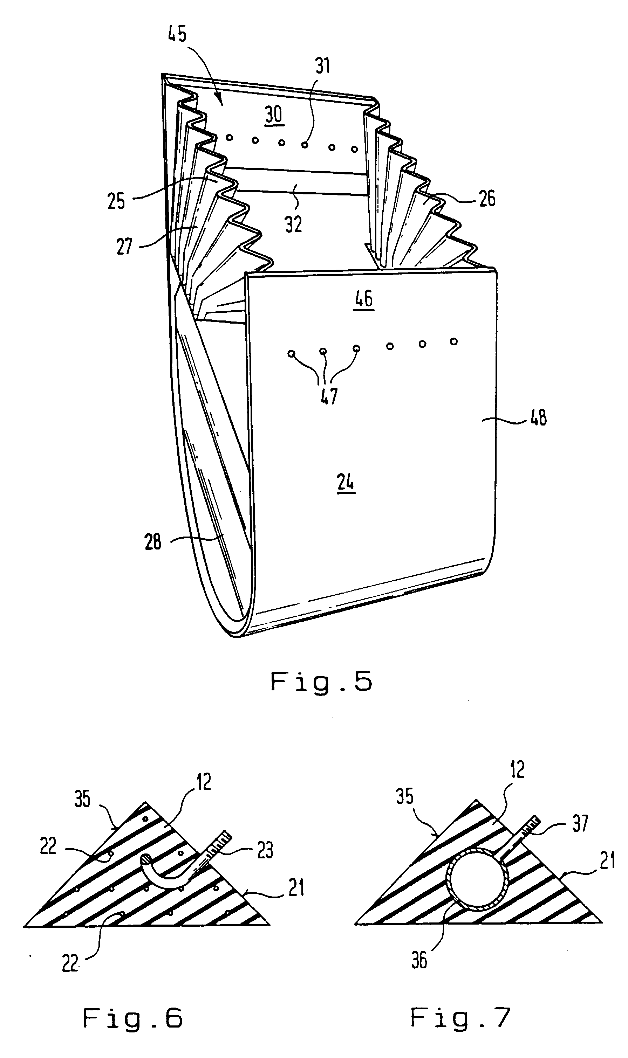

Fig. 2 zeigt eine perspektivische Ansicht eines Ausschnitts des Taschenförderers gemäß Fig. 1 in Richtung des Pfeils II. Anhand dieser Darstellung wird eine der möglichen Grundformen der Quertraversen 12 deutlich, die hier einen dreieckförmigen Querschnitt besitzen. In diesem Beispiel haben die Enden 41, 42 der Quertraversen 12 eine größere Querschnittsfläche, als der zwischen den Trägergurten 8, 10 befindliche Teil der Quertraversen 12, damit die Enden 41, 42 mit einer möglichst großen Hypotenusenfläche auf den Trägergurten 8, 10 aufvulkanisiert oder auch mit diesen verklebt werden können. Zwischen benachbarten Quertraversen 12, 13 wird jeweils eine einzelne Tasche 48 eingehängt und mit ihrem in Förderrichtung 17 vorn befindlichen Ende 45 an einer planen Befestigungsfläche 21 einer Quertraverse 12 befestigt, und mit ihrem in Förderrichtung 17 hinten befindlichen Ende 46 (siehe Figuren 3 und 4) an einer planen Befestigungsfläche 21 einer nachfolgenden Quertraverse 13. Um den Einfüllquerschnitt jeder Tasche 48 möglichst wenig zu beeinträchtigen, ist die der planen Befestigungsfläche 21 gegenüberliegende Dreiecksfläche der Quertraverse 12, die Führungsfläche 35 im Bereich zwischen den Trägergurtene 8, 10 lediglich als Steg ausgebildet, wodurch die Quertraverse 12 zwischen den Trägergurten 8, 10 den vorstehend bereits erwähnten reduzierten Querschnitt erhält. Die Gurtträger 8, 10 sind vorzugsweise aus Gummi oder einem gummiähnlichen Material mit einvulkanisierten Stahlseilen als Verstärkung hergestellt und weisen einen schmalen rechtwinkligen Querschnitt auf. Die Quertraversen 12 sind vorzugsweise ebenfalls aus Gummi oder gummiartigem Material hergestellt und besitzen zur Verstärkung ebenfalls eine Armierung 22, 36, die nachstehend anhand der Fig. 6 und 7 noch erwähnt wird. Bereits anhand dieser Fig. 2 ist ersichtlich, daß die Seitenwände 26 der Taschen 48 auf der Laufseite 43 der Trägergurte 8, 10 eine andere Faltung aufweisen, als auf der gegenüberliegenden Tragseite 44. Der oberhalb der Laufseite 43 befindliche erste Faltbereich 27 ist fächerförmig ausgebildet und der nur auf der rechten Seite des Taschenförderers sichtbare zweite Faltbereich 28 auf der Tragseite 44 besitzt eine zum Zugorgan 1 parallele Wellung.

Fig. 3 zeigt eine Draufsicht auf eine einzige der Taschen 48 gemäß Fig. 2. Anhand dieser Darstellung wird besonders deutlich, daß die Quertraversen 12 in ihrer Längsrichtung zwischen den beiden Trägergurten 8, 10 eine andere Querschnittsform aufweisen, als an ihren Enden 41, 42 im Bereich der Trägergurte 8, 10 selbst. Die im Vertikalschnitt näherungsweise U-förmig ausgebildeten Taschen 48, die alle gleich ausgebildet sind, besitzen eine Bodenwand 24 sowie die bereits erwähnten Seitenwände 25, 26, die faltbar ausgebildet sind. Die Bodenwand 24 besitzt quersteife Eigenschaften, was beispielsweise durch eine eingebrachte Armierung erreicht werden kann. An den Quertraversen 12 sind Nuten 29 vorgesehen, welche die Seitenwände 25, 26 aufnehmen und in ihrer Größe der Breite des ersten Faltbereiches 27 angepaßt sind.

Fig. 4 zeigt einen Längsschnitt längs der Linie IV - IV der Fig. 3 und verdeutlicht nochmals, daß die Quertraversen 12, 13 in diesem Ausführungsbeispiel die Querschnittsform eines Dreiecks, insbesondere die eines rechtwinkligen gleichschenkligen Dreiecks aufweisen. Während die Hypotenuse dieses Dreiecks auf dem Trägergurt 8 befestigt ist, bildet eine Seitenfläche der Quertraversen 12, 13 die plane Befestigungsfläche 21 zur Befestigung der Taschen 48. Diese Befestigungsfläche 21 ist gegenüber dem Zugorgan 1 bzw. gegenüber der durch die Trägergurte 8, 10 aufgespannten Trägergurtebene geneigt, so daß sie mit dieser einen Winkel einschließt. Dieser Winkel beträgt in diesem Ausführungsbeispiel 45°. Die Quertraversen bestehen, wie gesagt, aus Gummi oder gummiartigem Material und besitzen einvulkanisierte Stahlarmierungen 22, 36 zur Erhöhung ihrer Festigkeit. Desweiteren sind Schraubbolzen 23, 37 einvulkanisiert, die aus der Befestigungsfläche 21 senkrecht austreten und der Befestigung der Taschen 48 dienen. Hierbei wird der Neigungswinkel der Taschen 48 gegenüber der Trägergurtebene durch den Winkel bestimmt, den die Befestigungsfläche 21 mit der Trägergurtebene bzw. mit der Laufebene des Zugorgans 1 anschließt. Damit diese Taschen 48 nicht ausreißen, ist im Bereich der Befestigungsfläche 21 der Quertraversen 12 auf die Bodenwandung 24 jeder Tasche 48 ein Endstück 30 aufvulkanisiert, das zur Erhöhung der Stabilität durch Stahleinlagen armiert ist. In das Endstück 30 sind entsprechend der Anzahl aus der Befestigungsfläche 21 herausragenden Schraubbolzen 23, 37 Sacklöcher 31 eingearbeitet und auch das in Förderrichtung vorn befindliche Ende 45 und das in Förderrichtung hinten befindliche Ende 46 der Bodenwand 24 ist mit entsprechenden Montagelöchern 47 versehen, so daß jeweils ein in Förderrichtung vorn befindliches Ende 45 einer Tasche 49 gemeinsam mit dem in Förderrichtung hinten befindlichen Ende 46 einer in Förderrichtung vorausgehenden Tasche 48 gemeinsam auf die Befestigungsbolzen 23, 37 aufgesteckt und dort mittels Muttern befestigt werden kann. Hierzu weisen die Schraubbolzen 23, 37 ein Gewinde auf, und die Muttern werden in den Sacklöchern 31 aufgenommen. Das verstärkende Endstück 30 ist an seinem nach innen weisenden Endbereich schräg auf die Oberfläche der Bodenwand 24 zulaufend ausgebildet, was beim Entleeren der Tasche 48 ein ungehindertes Ausfließen des Schüttgutes ermöglicht. Der Führung des Schüttgutes bei der Abgabe an die Ablaufschurre 15 dient ferner der nach außen weisende freie Endbereich 34 des Endstücks 30, der über die Quertraverse 12 übersteht und in einer bevorzugten Ausführungsform auch noch den ersten Faltbereich 27 der Seitenwände 25, 26 überragt. Hierdurch wird restliches Schüttgut am Herabfallen gehindert. Insgesamt sorgt das knicksteife Endstück 30 dafür, daß die Taschen 48 bzw. deren Bodenwand 24 gegenüber dem Zugorgan 1 eine vorbestimmbare Neigung aufweisen. Dies führt zu einer Führungsfläche für das Schüttgut, wodurch dieses unter maximaler Ausnutzung des Tascheninhalts in die Tasche 48 gelangt. Die Dreiecksform der Quertraversen 12 führt ferner zu einer Führungsfläche 35, welche durch die gegenüber der Befestigungsfläche 21 gelegene Dreiecksfläche gebildet wird. Durch diese Führungsfläche 35 wird sichergestellt, daß auch in diesem Bereich eine gute Zuführung des Schüttgutes in die Tasche 48 erfolgt und zwischen benachbarten Taschen 48, 49 kein Schüttgut liegen bleibt.

Anhand Fig. 4 wird ferner nochmals deutlich, daß die Seitenwände 25, 26, von denen hier nur die Seitenwand 26 dargestellt ist, in zwei Faltbereiche 27, 28 aufgeteilt sind, von denen der erste Faltbereich 27 eine fächerförmige Ausbildung besitzt und auf der Laufeite 43 des Zugorgans 1 angeordnet ist, und der zweite Faltbereich 28 eine parallel zum Zugorgan 1 gerichtete wellenartige Faltung besitzt und auf der Tragseite 44 des Zugorgans 1 angeordnet ist.

Die Faltbereiche der Seitenwände 25, 26 jeder Tasche 48 werden insbesondere auch anhand Fig. 5 deutlich, die eine einzelne Tasche 48 zeigt, so wie sie in das Zugorgan 1 bzw. in die Trägergurte 8, 10 eingehängt wird. Der erste Faltbereich 27, der sich in diesem ersten Ausführungsbeispiel auf der Laufseite des Zugorgans 1 erstreckt, ermöglicht die Stauchung der Seitenwände 25, 26 beim Umlauf um die Antriebstrommeln 2 bzw. die Umlenktrommeln 4 und die Dehnung der Seitenwände 25, 26 beim Umlauf um die Ablenktrommeln 6. Der zweite Faltbereich 28 ist in diesem Ausführungsbeispiel auf der Tragseite des Zugorgans 1 angeordnet und weist eine zu diesem Zugorgan 1 näherungsweise parallele Wellung auf, die zur Trägergurtebene unsymmetrisch ist und vorzugsweise eine Sägezahnform aufweist. Die Wellung der zweiten Faltbereiche 28 ermöglicht eine Stauchung der Seitenwände 25, 26 und damit der Taschen 48 beim Umlauf um die Trommeln 2, 4, 6 in radialer Richtung. Dies ist beim Umlauf um die Trommeln notwendig, um eine Anpassung der Taschenform an die sich einstellende Krümmung durch die Umlenkung des Zugträgers 1 zu ermöglichen. Hierbei trägt die asymmetrische Wellung der Seitenwände 25, 26 in deren zweitem Faltbereich 28 dazu bei, das Entleeren des Schüttguts zu erleichtern. Durch die vorzugsweise gewählte Sägezahnform der Wellung des zweiten Faltbereiches 28 bleibt beim Entleeren insbesondere kein Schüttgut in der Wellung hängen, so daß eine Ansammlung von Resten in der Wellung vermieden wird.

Ferner zeigt Fig. 5 nochmals deutlich, daß sowohl das in Förderrichtung vorn befindliche Ende 45 der Bodenwand 24 als auch deren in Förderrichtung hinten befindliches Ende 46 mit den Montagelöchern 47 bzw. - soweit es das Endstück 30 betrifft, was auf das in Förderrichtung vorn befindliche Ende 45 der Bodenwand 24 aufgebracht ist - mit Sacklöchern 31 versehen ist, wobei die Sacklöcher 31 mit den Montagelöchern 47 in dem in Förderrichtung vorn befindlichen Ende 45 fluchten. Mittels der Montagelöcher 47 und der Sacklöcher 31 wird die Tasche 48 zwischen zwei benachbarte Quertraversen 12, 13 eingehängt, indem das in Förderrichtung vorn befindliche Ende 45 einer Tasche 48 an einer in Förderrichtung vorn befindlichen Quertraverse 12 auf die dort senkrecht aus der Befestigungsfläche 21 heraustretenden Schraubbolzen 23, 37 aufgesteckt wird, und mit ihrem in Förderrichtung hinten befindlichen Ende 46 auf die gleichen Schraubbolzen 23, 37 der nachfolgenden Quertraverse 13 (vgl. nochmals Fig. 4; die Förderrichtung ist dort mit dem Pfeil 17 bezeichnet).

Die Figuren 6 und 7 zeigen Vertikalschnitte durch verschiedenartig ausgestaltete, im Querschnitt dreieckförmige Quertraversen. Während die Fig. 6 den Querschnitt der bereits aus Fig. 4 bekannten Ausgestaltung der Quertraversen 12 mit einvulkanisierten U-förmigen Schraubbolzen 23 und ebenfalls einvulkanisierten Stahlarmierungen 22 zeigt, ist in Fig. 7 eine alternative Ausgestaltung der Armierung dargestellt, die hier aus einem Stahlrohr 36 besteht, an deren Umfang die Schraubbolzen 37, die hier stangenförmig ausgebildet sind, befestigt sind, und das in Längsrichtung durch die Quertraverse 12 verläuft. In beiden Ausführungsformen der Quertraversen 12 stehen die Schraubolzen 23, 37 mit ihren Enden, die ein Gewinde tragen, senkrecht auf der planen Befestigungsfläche 21 und werden beim Befestigen der Taschen 48 durch die Montagelöcher 47 und die Sacklöcher 31 gesteckt.

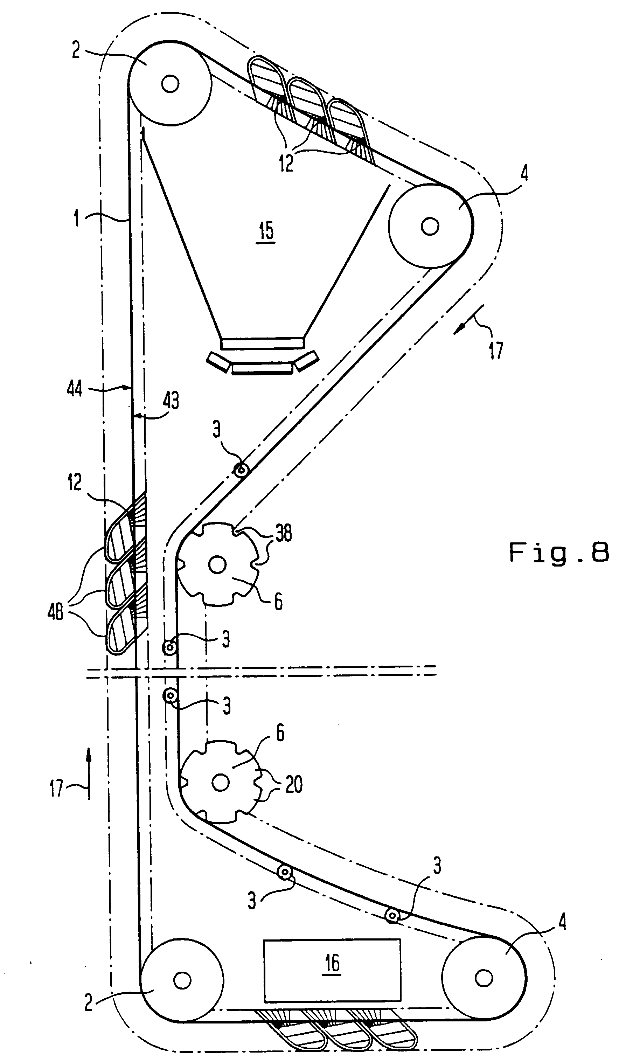

Fig. 8 zeigt eine schematische Seitenansicht eines zweiten Ausführungsbeispiels eines erfindungsgemäßen Taschenförderers. Der Unterschied dieses zweiten Ausführungsbeispieles gegenüber dem ersten Ausführungsbeispiel gemäß Fig. 1 besteht darin, daß die Quertraversen 12 zur Befestigung der Taschen 48 in diesem zweiten Ausführungsbeipiel auf der Tragseite 44 des Zugorgans 1 bzw. der Trägergurte 8, 10 angeordnet sind, und daß die Antriebstrommeln 2 und die Umlenktrommeln 4 keine Ausnehmungen 38 aufzuweisen brauchen, während aber die Ablenktrommeln 6 zur Aufnahme der Quertraversen 12 mit den Ausnehmungen 38 versehen sind. Desweiteren sind nur zwei Ablenktrommeln 6 vorgesehen, und nicht eine ganze Reihe von Ablenktrommeln, wie in dem ersten Ausführungsbeipiel gemäß Fig. 1, so daß zur Dämpfung von Schwingungen des Zugorgans 1 zusätzlich Schwingungsdämpfer 3 vor, zwischen und nach den Ablenktrommeln 6 angeordnet sind. Die Quertraversen 12 sind auch in diesem Ausführungsbeispiel mit den Trägergurten 8, 10 verklebt, können aber zusätzlich auch mittels in die Quertraversen 12 eingelassener U-förmiger Schraubbolzen mit den Trägergurten 8, 10 verschraubt sein. Da letzteres jedoch einen größeren Herstellungsaufwand erfordert, wird eine Klebeverbindung bevorzugt, da sich in der Festigkeit der Verbindung keine Unterschiede ergeben.

Die Ausnehmungen 38 nehmen die Enden 41, 42 der Quertraversen beim Umlauf der Trägergurte 8, 10 um die Ablenktrommeln 6 auf und sorgen dadurch für eine Synchronisation der beiden Trägergurte, ohne dabei nennenswerte Kräfte auf die Trägergurte 8, 10 zu übertragen. Der Antrieb des Zugorgans 1 erfolgt über die obere und die untere Antriebstrommel 2 in Form eines Reibantriebs, wobei gegebenenfalls auch eine Antriebstrommel 2 ausreichend ist. Im übrigen wird auch hier der Rücklauf des Taschenförderers mittels der Umlenktrommeln 4 und der Ablenktrommeln 6 dicht an den Vorlauf herangebracht, um beispielsweise eine Tunnelförderung oder eine gemeinsame Trassenführung über weite Strecken zu ermöglichen. Das ist durch die unterbrochene Darstellung des Taschenförderers angedeutet.

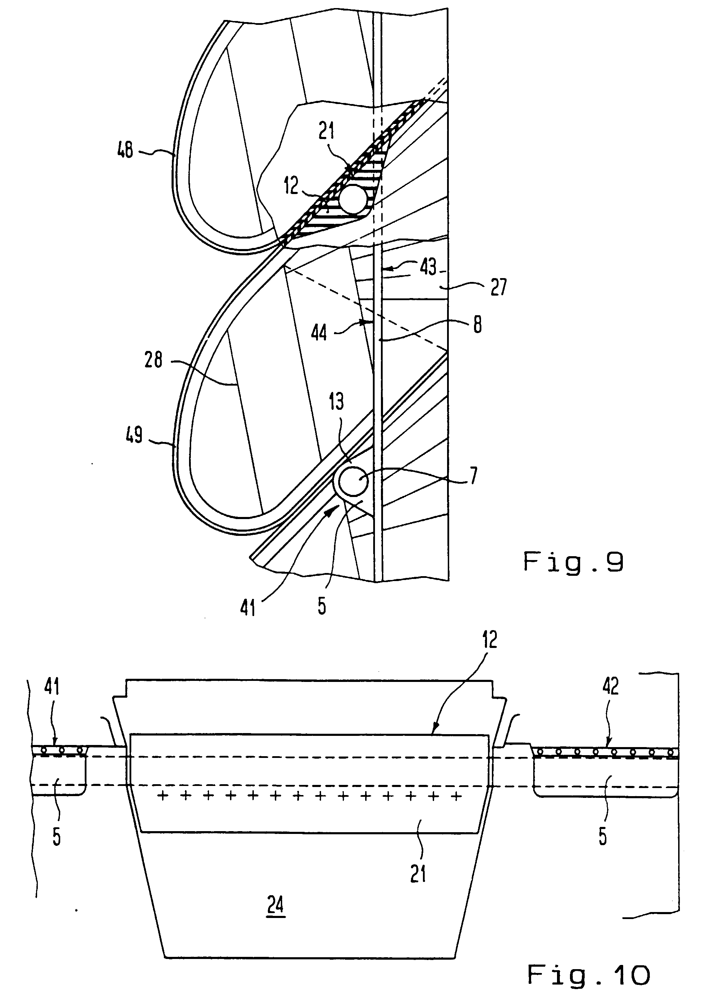

Fig. 9 zeigt eine der Fig. 4 im wesentlichen entsprechende Längsschnittdarstellung durch drei benachbarte Taschen 48. Gezeigt ist hier die Befestigung der Taschen 48 an dem Trägergurt 8 mittels der Quertraversen 12, die hier abweichend von den bisher beschriebenen Quertraversen an ihren Enden 41, 42 anders ausgebildet sind. Hier sind die Enden 41, 42 der Quertraversen 12 als Zapfen ausgebildet, die drehbar in Lagerblöcken 5 gelagert sind, die auf den Trägergurten 8, 10 befestigt sind. Im oberen Teil der Fig. 8 ist der zwischen den Trägergurten 8, 10 befindliche Mittelteil einer Quertraverse 12 dargestellt, die im wesentlichen auch noch eine dreieckförmige Querschnittsform aufweist, mit einer extrem vergrößerten planen Befestigungsfläche 21, welche als Hypotenuse der Dreiecksform angesehen werden kann. An dieser vergrößerten Befestigungsfläche 21 sind in der vorstehend anhand des ersten Ausführungsbeispiels beschriebenen Art und Weise zwei benachbarte Taschen 48, 49 je zur Hälfte befestigt. Die vergrößerte Befestigungsfläche 21 gibt den Taschen zum einen eine ausreichende Befestigung und zum anderen eine entsprechend gute Führung unter Einschluß eines Neigungswinkels gegenüber der Trägergurtebene.

Im unteren Teil der Fig. 9 ist die Befestigung einer Quertraverse 13 mittels eines Lagerblocks 5 auf dem Trägergurt 8 dargestellt. Das als Zapfen ausgebildete Ende 41 der Quertraverse 13 ist in einer Bohrung 7 des Lagerblocks 5 drehbar aufgenommen, und der Lagerblock 5 ist mit seiner planen Unterfläche 14 auf der Tragseite 44 des Zugorgans 1 bzw. der Trägergurte 8, 10 befestigt. Ansonsten besitzen auch hier die Taschen 48, 49 Seitenwände mit einem ersten Faltbereich 27 und einem zweiten Faltbereich 28, wobei sich der erste Faltbereich 27 im wesentlichen auf der Laufseite 43 des Zugorgans 1 befindet, und der zweite Faltbereich 28 auf der Tragseite 44.

Fig. 10 zeigt eine ausschnittsweise Draufsicht auf die Befestigung einer einzelnen Tasche 48 bzw. der Bodenwand 24 der Tasche an einer Quertraverse 12, die in ihrer Längsrichtung die vorstehend an Hand Fig. 8 beschriebene unterschiedliche Querschnittsform aufweist. Deutlich erkennbar ist die vergrößerte plane Befestigungsfläche 21, an der die Bodenwand 24 der Tasche 48 befestigt wird. An den beiden Enden 41, 42 ist die Quertraverse 12 in Lagerblöcken 5 aufgenommen, die ihrerseits auf den hier nicht dargestellten Trägergurten 8, 10 befestigt sind.

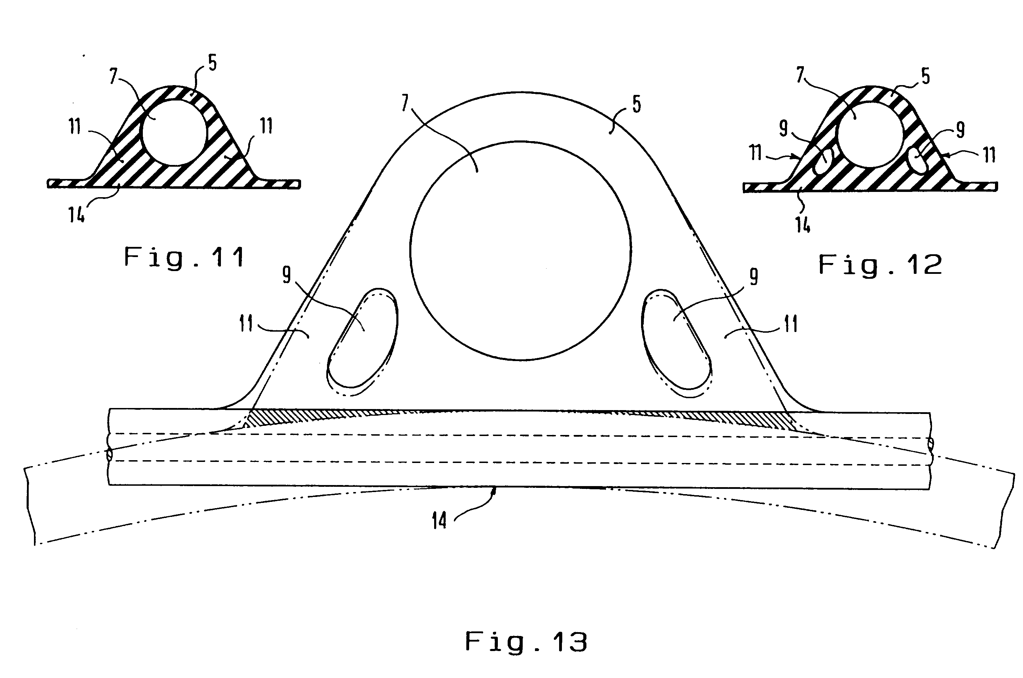

Die Fig. 11 zeigt einen Querschnitt durch einen Lagerblock 5 mit der Bohrung 7 zur Aufnahme der zapfenförmig ausgebildeten Enden 41, 42 der Quertraversen 12 sowie mit der Unterfläche 14, die auf den Trägergurten 8, 10 befestigt, insbesondere verklebt wird. Fig. 12 zeigt eine bevorzugte Auführungsform des Lagerblocks 5, bei dem außer der einen Zapfen einer Quertraverse 12 aufnehmenden Bohrung 7 weitere Durchbrüche 9 in einem Bereich 11 zwischen der Bohrung 7 und der Unterfläche 14 des Lagerblocks 5 angeordnet sind. Diese Durchbrüche im Material des Lagerblocks 5 sorgen dafür, daß sich der Lagerblock beim Umlauf um eine der Trommeln 2, 4, 6 leicht verformen kann, wodurch die ansonsten verstärkt auftretende Materialermüdung stark verringert wird. Die Durchbrüche 9 nehmen nämlich die Verformungsenergie weitestgehend auf und verringern dadurch Dehnungen und Straffungen des Lagerblock-Materials.

Der Vorteil einer Ausgestaltung des Lagerblocks 5 gemäß Fig. 12 zeigt die Fig. 13, wo ein Lagerblock in seiner Geradlauf-Form und, gestrichelt, in seiner gekrümmten Umlaufform dargestellt ist. Anhand dieser Darstellung wird deutlich, daß sich der Lagerblock 5 in den Bereichen 11 zwischen der Bohrung 7 und der Unterfläche 14 beim Umlauf stark dehnt, was normalerweise zu einer hohen Materialbeanspruchung in jenen Bereichen 11 führt. Diese Materialbeanspruchung wird durch die Durchbrüche 9 stark reduziert, wobei selbstverständlich auch weitere Durchbrüche 9 oder auch welche mit anderen Formen vorteilhaft sein können.

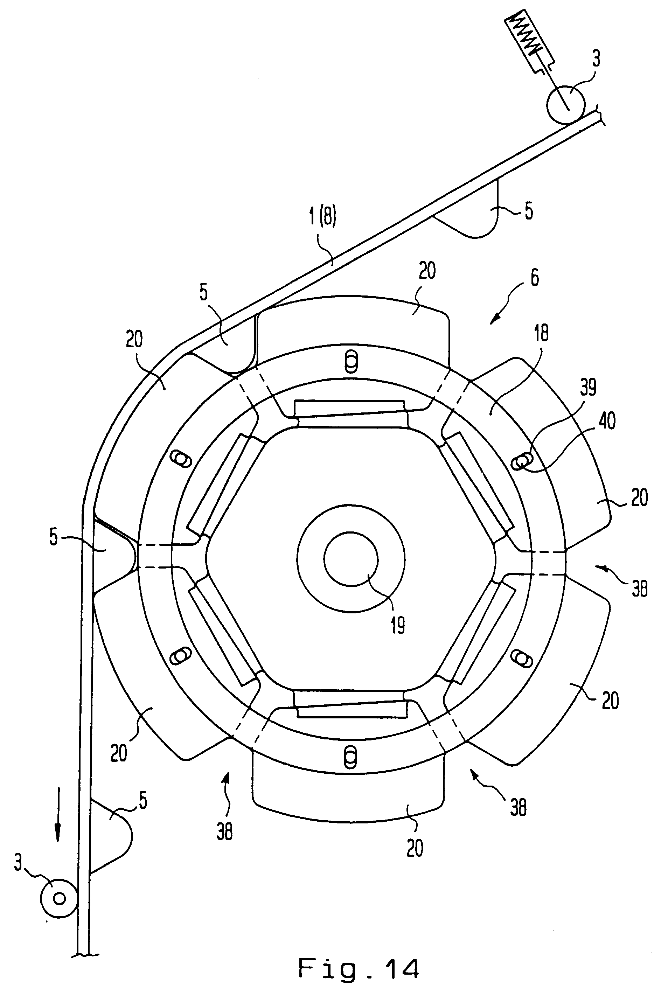

Fig. 14 zeigt eine schematische Seitenansicht einer Ablenktrommel 6 sowie eines darum geführten Zugorgans 1 bzw. eines Trägergurts 8. Auf der Laufseite des Trägergurts 8 sind die Lagerblöcke 5 gemäß dem zweiten Ausführungsbeispiel eines Taschenförderers nach Fig. 8 angeordnet, die beim Umlauf um die Ablenktrommel 6 in die Ausnehmungen 38 eingreifen. Hier sind die Ausnehmungen 38 zwischen Trommelsegmenten 20 gebildet, die ihrerseits radial verstellbar sind. Hierzu sind die Trommelsegmente 20 mittels je eines Langlochs 39 und je eines Bolzens 40 an einem Stellring 18 geführt und beispielsweise zentral radial nach außen und innen verfahrbar. Werden die Trommelsegmente 20 nach außen verstellt, vergrößert sich der Umfang der Ablenktrommel 6, wodurch ein eventueller Schlupf zwischen der um die Nabe 19 umlaufenden Ablenktrommel 6 und der Laufbewegung des Trägergurts 8 ausgeglichen werden kann. Es ist nämlich in jedem Fall zu vermeiden, daß nennenswerte Kräfte von der Ablenktrommel 6 auf die Lagerblöcke 5 übertragen werden, da die Gefahr besteht, daß diese dann von den Trägergurten 8, 10 abgeschoren werden. Die zentrale Verstellung aller Trommelsegmente 20 kann in an sich bekannter Weise durch einen in die Nabe 19 eingearbeiteten Mechanismus erfolgen.

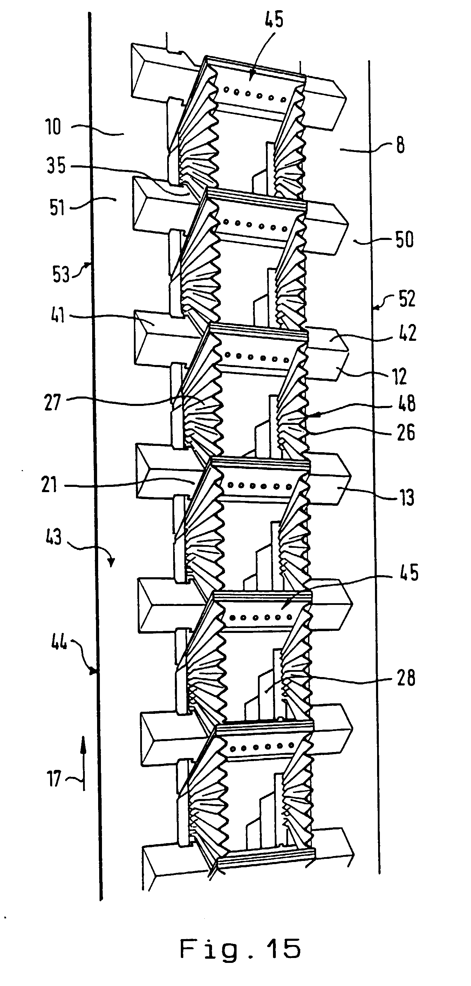

Fig. 15 zeigt als drittes Ausführungsbeispiel eine der Fig. 2 entsprechende perspektivische Draufsicht auf einen Ausschnitt des Taschenförderers gemäß dem ersten Ausführungsbeispiel, bei dem die Quertraversen 12, 13 auf der Laufseite 43 der Trägergurte 8, 10 angeordnet sind. In dieser Figur ist jedoch eine sehr vorteilhafte Abänderung hinsichtlich der Befestigung der Quertraversen 12, 13 auf den Trägergurten 8, 10 erfolgt. Hier stehen die Trägergurte 8, 10 quer zur Längsrichtung des Fördergurtes über die Enden 41, 42 der Quertraversen 12, 13 über, so daß die Trägergurte 8, 10 freie Randstreifen 50, 51 bilden, über welche ohne jeden Eingriff der Quertraversen 12, 13 in die Antriebstrommeln 2 der Reibantrieb der Trägergurte 8, 10 erfolgt. Die Breite der Randstreifen im Verhältnis zur Breite desjenigen Bereiches, auf dem die Quertraversen auf den Trägergurten 8, 10 befestigt sind, kann selbstverständlich an die jeweiligen Bedürfnisse angepaßt werden; die Randstreifen 50, 51 können im Extremfall auch so breit gewählt werden, daß eher der Befestigungsbereich für die Quertraversen 12, 13 als "Randstreifen" bezeichnet werden müßte. Der Vorteil dieser Alternative besteht darin, daß die Quertraversen 12, 13 auf der Laufseite 43 angeordnet werden können, ohne daß Probleme mit einem Schlupf zwischen den Antriebstrommeln 2 und den Trägergurten 8, 10 oder aber die von Kettenantrieben bekannten Probleme entstehen. Selbstverständlich ist es bei den mit den Randstreifen 50, 51 ausgebildeten Trägergurten 8, 10 auch nicht erforderlich, die Antriebstrommeln 2 und die Umlenktrommeln 4 mit den vorstehend beschriebenen Ausnehmungen 38 zu versehen.

## Patentansprüche

1. Taschenförderer mit einem endlosen Zugorgan (1), das über Antriebs-, Umlenk- und Ablenktrommeln (2, 4, 6) geführt ist und das wenigstens zwei beabstandete Trägergurte (8, 10) aufweist, zwischen denen eine Vielzahl zueinander beabstandeter Quertraversen (12) angeordnet sind, und mit Taschen (48), die jeweils eine aus Gummi oder gummiartigem Material hergestellte Bodenwand (24) aufweisen, die zwischen benachbarten Quertraversen (12) verläuft,
dadurch gekennzeichnet,
daß die Quertraversen (12) zur Befestigung der Bodenwand (24) eine plane Befestigungsfläche (21) aufweisen, die mit der Trägergurtebene einen Winkel einschließt.

2. Taschenförderer nach Anspruch 1,
dadurch gekennzeichnet,
daß die Quertraversen (12) eine dreieckförmige Querschnittsform, vorzugsweise die Form eines gleichschenkligen rechtwinkligen Dreiecks aufweisen.

3. Taschenförderer nach Anspruch 1 oder 2,
dadurch gekennzeichnet,
daß die Quertraversen (12) in ihrer Längsrichtung unterschiedliche Querschnittsformen aufweisen.

4. Taschenförderer nach einem der Ansprüche 1 bis 3,
dadurch gekennzeichnet,
daß die Quertraversen (12) an den beiden Enden (41, 42) als Zapfen ausgebildet sind, die drehbar in Lagerblöcken (5) gelagert sind, welche auf den Trägergurten (8, 10) befestigt sind.

5. Taschenförderer nach Anspruch 4,
dadurch gekennzeichnet,
daß jeder Lagerblock (5) außer der einen Zapfen einer Quertraverse (12) aufnehmenden Bohrung (7) weitere Durchbrüche (9) aufweist, die im Bereich (11) zwischen der Bohrung (7) und der Unterfläche (14) des Lagerblocks (5) angeordnet sind.

6. Taschenförderer nach einem der Ansprüche 1 bis 5,
dadurch gekennzeichnet,
daß die Quertraversen (12) aus mit einer Armierung (22) versehenem Gummi oder gummiartigem Material hergestellt sind.

7. Taschenförderer nach einem der Ansprüche 1 bis 6,
dadurch gekennzeichnet,
daß an der Befestigungsfläche (21) der Quertraverse (12) Befestigungsmittel (23, 37) für die Tasche (48) vorgesehen sind, die insbesondere als U-förmige Schraubbolzen (23) ausgebildet sind.

8. Taschenförderer nach einem der Ansprüche 1 bis 7,
dadurch gekennzeichnet,
daß an jeder Befestigungsfläche (21) ein in Förderrichtung (17) hinten befindliches Ende (46) der Bodenwand (24) einer Tasche (48) und ein vorn befindliches Ende (45) der Bodenwand (24) einer benachbarten, nachfolgenden Tasche (49) übereinanderliegend befestigt sind.

9. Taschenförderer nach einem der Ansprüche 1 bis 8,
dadurch gekennzeichnet,
daß an der Befestigungsfläche (21) Nuten (29) zur Aufnahme der Seitenwände (25, 26) der Taschen (48) ausgebildet sind.

10. Taschenförderer nach einem der Ansprüche 1 bis 9,
dadurch gekennzeichnet,
daß die Taschen (48) eine U-förmige Querschnittsform aufweisen, wobei die Bodenwand (24) quersteife Eigenschaften besitzt und Seitenwände (25, 26), zwischen denen die Bodenwand (24) angeordnet ist, als formgebende Stützelemente der Taschen (48) wirken.

11. Taschenförderer nach einem der vorstehenden Ansprüche,
dadurch gekennzeichnet,
daß die Antriebstrommeln (2) und/oder die Umlenktrommeln (4) und/oder die Ablenktrommeln (6) auf ihrem Umfang Ausnehmungen (38) zur Aufnahme der Lagerblöcke (5) bzw. der Enden der Quertraversen (12) aufweisen.

12. Taschenförderer nach Anspruch 11,
dadurch gekennzeichnet,
daß die Ausnehmungen (38) zwischen Trommelsegmenten (20) gebildet sind, die radial verstellbar sind.

13. Taschenförderer nach einem der vorstehenden Ansprüche,
dadurch gekennzeichnet,
daß die Quertraversen (12) die Trägergurte (8, 10) quer zur Förderrichtung (17) nur teilweise überdecken, so daß zwischen den Enden (41, 42) der Quertraversen (12) und dem Außenrand (52, 53) der Trägergurte (8, 10) je ein freier Randstreifen (50, 51) gebildet wird.

## Claims

1. Canvas sling conveyor with an endless tractive unit (1), which conveyor is guided over drive drums, tail pulleys and deflector drums (2, 4, 6), and which has at least two spaced-apart carrier belts (8, 10), between which a plurality of crosspieces (12), spaced apart from one another, are disposed, and with pockets (48) each of which has a base wall (24) made of rubber or rubber-like material and extending between adjacent crosspieces (12),
characterised in that,
in order to attach the base wall (24), the crosspieces (12) have a planar attachment surface (21) which encloses an angle with the plane of the carrier belt.

2. Canvas sling conveyor according to claim 1,
characterised in that
the crosspieces (12) have a triangular cross-sectional shape, preferably the shape of an isosceles right-angled triangle.

3. Canvas sling conveyor according to claim 1 or 2,
characterised in that
the crosspieces (12) have different cross-sectional shapes in their longitudinal direction.

4. Canvas sling conveyor according to one of claims 1 to 3,
characterised in that
the crosspieces (12) are formed at both ends (41, 42) as pins which are rotatably mounted in bearing blocks (5) which are attached on the carrier belts (8, 10).

5. Canvas sling conveyor according to claim 4,
characterised in that
each bearing block (5), apart from the bore (7) accommodating one pin of a crosspiece (12), has further apertures (9) disposed in the area (11) between the bore (7) and the lower surface (14) of the bearing block (5).

6. Canvas sling conveyor according to one of claims 1 to 5,
characterised in that
the crosspieces (12) are made from a rubber or rubber-like material provided with a reinforcement (22).

7. Canvas sling conveyor according to one of claims 1 to 6,
characterised in that
there are provided on the attachment surface (21) of the crosspieces (12) attachment means (23, 37) for the pocket, which are in particular in the shape of U-shaped threaded bolts (23).

8. Canvas sling conveyor according to one of claims 1 to 7,
characterised in that
there are attached one above the other to each attachment surface (21) an end (46) of the base wall (24) of a pocket (48), located to the rear in the direction of conveyance (17), and an end (45), located to the front, of the base wall (24) of an adjacent, following pocket (49).

9. Canvas sling conveyor according to one of claims 1 to 8,
characterised in that
there are formed on the attachment surface (21) grooves (29) for receiving the lateral walls (25, 26) of the pockets (48).

10. Canvas sling conveyor according to one of claims 1 to 9,
characterised in that
the pockets (48) are in a U-shaped cross-sectional shape, the base wall (24) has transversely-rigid properties, and lateral walls (25, 26) between which the base wall (24) is located, act as shape-imparting support members of the pockets (48).

11. Canvas sling conveyor according to one of the preceding claims,
characterised in that
the drive drums (2) and/or the tail pulleys (4) and/or the deflector drums (6) have on their circumference recesses (38) for receiving the bearing blocks (5) or the ends of the crosspieces (12).

12. Canvas sling conveyor according to claim 11,
characterised in that
the recesses (38) are formed between drum segments (20) which are radially displaceable.

13. Canvas sling conveyor according to one of the preceding claims,
characterised in that
the crosspieces (12) only partly overlap the carrier belts (8, 10) transversely to the direction of conveyance (17), so that a free lateral strip (50, 51) is respectively formed between the ends (41, 42) of the crosspieces (12) and the outer edge (52, 53) of the carrier belts (8, 10).

## Revendications

1. Transporteur à poches comprenant un organe de traction sans fin (1), qui est guidé au moyen de tambours d'entraînement, de renvoi et de déflexion (2, 4, 6) et qui comporte au moins deux bandes porteuses écartées (8, 10), entre lesquelles sont agencées une pluralité de traverses (12) écartées les unes des autres, et comprenant des poches (48) qui présentent chacune une paroi de fond (24) réalisée en caoutchouc ou en matériau analogue au caoutchouc, qui s'étend entre des traverses voisines (12),
caractérisé en ce que
les traverses (12) présentent, pour la fixation de la paroi de fond (24), une surface de fixation plane qui forme un angle avec le plan des bandes porteuses.

2. Transporteur à poches selon la revendication 1, caractérisé en ce que les traverses (12) présentent une section transversale de forme triangulaire, de préférence sous la forme d'un triangle rectangle isocèle.

3. Transporteur à poches selon l'une ou l'autre des revendications 1 et 2, caractérisé en ce que les traverses (12) présentent des formes de section transversale différentes dans leur direction longitudinale.

4. Transporteur à poches selon l'une quelconque des revendications 1 à 3, caractérisé en ce que les traverses (12) sont réalisées aux deux extrémités (41, 42) comme des tenons qui sont montés en rotation dans des blocs de montage (5), lesquels sont fixés sur les bandes porteuses (8, 10).

5. Transporteur à poches selon la revendication 4, caractérisé en ce que chaque bloc de montage (5) comporte, outre le perçage (7) qui reçoit l'un des tenons d'une traverse (12), d'autres passages (9) qui sont ménagés dans la région (11) entre le perçage (7) et la face inférieure (14) du bloc de montage (5).

6. Transporteur à poches selon l'une quelconque des revendications 1 à 5, caractérisé en ce que les traverses (12) sont réalisées en caoutchouc ou en matériau analogue au caoutchouc, pourvu d'une armature (22).

7. Transporteur à poches selon l'une quelconque des revendications 1 à 6, caractérisé en ce que des organes de fixation (23, 37) pour la poche (48) sont prévus sur la surface de fixation (21) de la traverse (12), lesdits organes étant réalisés en particulier sous forme de boulons à visser (28) en forme de U.

8. Transporteur à poches selon l'une quelconque des revendications 1 à 7, caractérisé en ce que sur chaque surface de fixation (21) sont fixées en superposition une extrémité (46), située en arrière en direction de transport (17), de la paroi de fond (24) d'une poche (48), et une extrémité (45), située en avant, de la paroi de fond (24) d'une poche voisine suivante (49).

9. Transporteur à poches selon l'une quelconque des revendications 1 à 8, caractérisé en ce que des gorges (29) sont ménagées sur la surface de fixation (21) pour recevoir les parois latérales (25, 26) des poches (48).

10. Transporteur à poches selon l'une quelconque des revendications 1 à 9, caractérisé en ce que les poches (48) présentent une section transversale en forme de U, telle que la paroi de fond (24) possède des propriétés de rigidité transversale, et que les parois latérales (25, 26) entre lesquelles est agencée la paroi de fond (24) font office d'éléments de support et de conformation des poches (48).

11. Transporteur à poches selon l'une quelconque des revendications précédentes, caractérisé en ce que les tambours d'entraînement (2) et/ou les tambours de renvoi (4) et/ou les tambours de déflexion (6) présentent à leur périphérie des évidements (38) pour recevoir les blocs de montage (5), ou les extrémités des traverses (12).

12. Transporteur à poches selon la revendication 11, caractérisé en ce que les évidements (38) sont formés entre des segments de tambours (20) qui sont réglables radialement.

13. Transporteur à poches selon l'une quelconque des revendications précédentes, caractérisé en ce que les traverses (12) recouvrent uniquement partiellement les bandes porteuses (8, 10) perpendiculairement à la direction de transport (17), de sorte qu'il se forme un ruban de bordure libre (50, 51) respectif entre les extrémités (41; 42) des traverses (12) et la bordure extérieure (52, 53) des bandes porteuses (8, 10).
